# EUROPEAN PATENT SPECIFICATION

(11) **EP 2 345 806 B1**
(45) Date of publication and mention of the grant of the patent: **09.01.2013**
(21) Application number: 11150760.4
(22) Date of filing: 12.01.2011
(51) Int. Cl.: F02D 9/10, F02D 11/10, H02K 5/24

(54) **Electric actuator for a valve of an internal combustion thermal engine**
Elektrischer Aktor für ein Ventil einer Brennkraftmaschine
Actuateur électrique pour un papillon de moteur à combustion internee

(30) Priority: 12.01.2010 IT BO20100009
(43) Date of publication of application: 20.07.2011
(73) Proprietor: Magneti Marelli S.p.A., Corbetta (MI) (IT)
(72) Inventor: Bellato, Nazario, 40131 Bologna (IT); Musolesi, Stefano, 40122 Bologna (IT); Ferretti, Giorgio, 44100 Ferrara (IT)
(74) Representative: Jorio, Paolo

(56) References cited:
- EP-A1- 1 369 566
- WO-A1-00/71282
- DE-A1-102004 017 300
- GB-A- 2 323 128
- JP-A- 2001 346 351
- US-A- 6 021 993
- US-A1- 2007 103 010

## Description

### TECHNICAL FIELD

The present invention relates to an electric actuator for a valve of an internal combustion thermal engine.

### PRIOR ART

A butterfly valve, which is arranged upstream of an intake manifold and adjusts the flow rate of the air which is fed to the cylinders, may be provided in the internal combustion engines. A typical, currently marketed butterfly valve has a valve body provided with a tubular feeding pipe, through which the air aspirated by the internal combustion engine flows; a butterfly plate, which is keyed onto a rotating shaft to rotate between an opening position and a closing position of the feeding pipe, is accommodated within the feeding pipe. The rotation of the butterfly plate is controlled by an actuator device comprising an electric, direct current motor coupled to the rotating shaft of the butterfly plate by means of a gear transmission and at least one spring, which pushes the rotating shaft of the butterfly plate towards the closing position.

The electric motor is typically arranged within a blind tubular housing (i.e. having an open end and an opposite closed end) and is kept within the tubular housing by a closing plate fixed at one opening of the tubular housing itself. In order to prevent in use the electric motor from performing axial movements (i.e. to prevent it from axially vibrating, thus subjecting the mechanical parts to repeated, minor axial stresses which may determine fatigue failure on the long term), a Belleville washer, which is compressed when the closing plate is fixed in position, is arranged between a bottom wall of the tubular housing and a bottom wall of the electric motor.

However, the Belleville washer can limit the width of the axial movements of the electric motor, but cannot fully eliminate the axial movements (i.e. in use the electric motor may still axially vibrate even if with a small vibration width). Furthermore, the Belleville washer substantially has no limiting effect on the radial movements of the electric motor, which therefore is substantially free to radially vibrate (thus subjecting the mechanical parts to repeated, minor radial stresses which may determine fatigue failure on the long term) .

GB2323128A describes an electric actuator for a valve 5 of an internal combustion thermal engine. The electric actuator comprises: a cylinder-shaped, electric motor 2; a tubular housing 1C, in which electric motor 2 is arranged; a closing plate 2D, which is fixed at an opening of the tubular housing 1C to keep electric motor 2 within the tubular housing 1C itself; and a clamping band 9, which is inserted into a bottom portion (of smaller diameter) in the tubular housing 1C and is arranged between a wall of the bottom portion of tubular housing 1C and a bottom end wall (of smaller diameter) of electric motor 2.

### DESCRIPTION OF THE INVENTION

It is the object of the present invention to provide an electric actuator for a valve of an internal combustion thermal engine, which electric actuator is free from the above-described drawbacks, and in particular, is easy and cost-effective to be implemented.

According to the present invention, an electric actuator for a valve of an internal combustion thermal engine is provided as claimed in the appended claims.

### BRIEF DESCRIPTION OF THE DRAWINGS

The present invention will now be described with reference to the accompanying drawings, which show a non-limitative embodiment thereof, in which:
- figure 1 is a perspective, partially exploded view with parts removed for clarity of a butterfly valve provided with an electric motor driven in accordance with the present invention;
- figure 2 is a front view with parts removed for clarity of the butterfly valve in figure 1;
- figure 3 is a perspective view of an electric motor of the butterfly valve in figure 1;
- figure 4 is a cross section view of a housing of the electric motor in figure 3;
- figure 5 is a perspective view of a clamping band which is wound about the electric motor in figure 3; and
- figure 6 is a side view of the clamping band in figure 5.

### PREFERRED EMBODIMENTS OF THE INVENTION

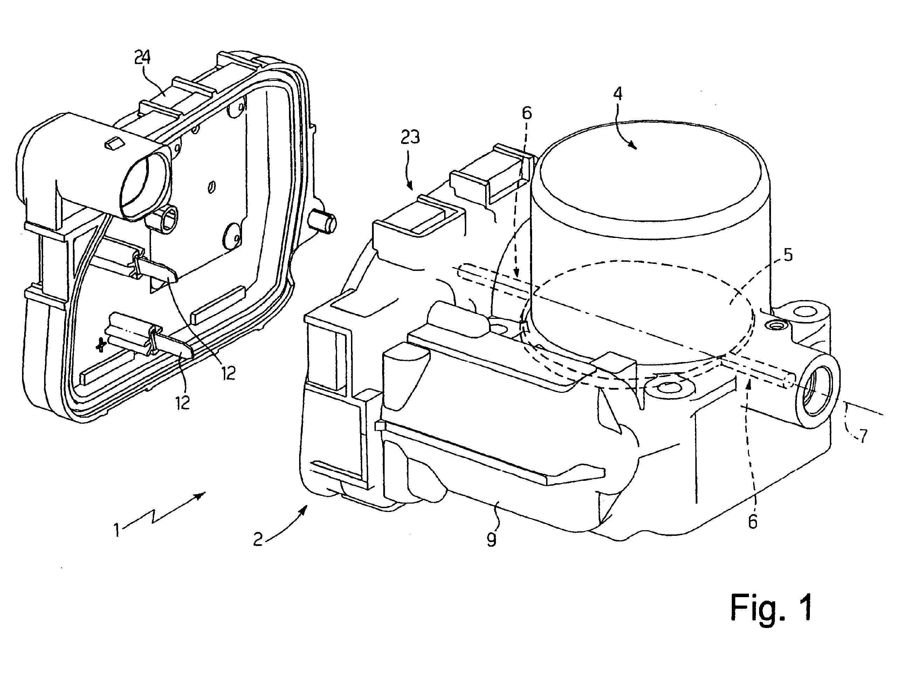

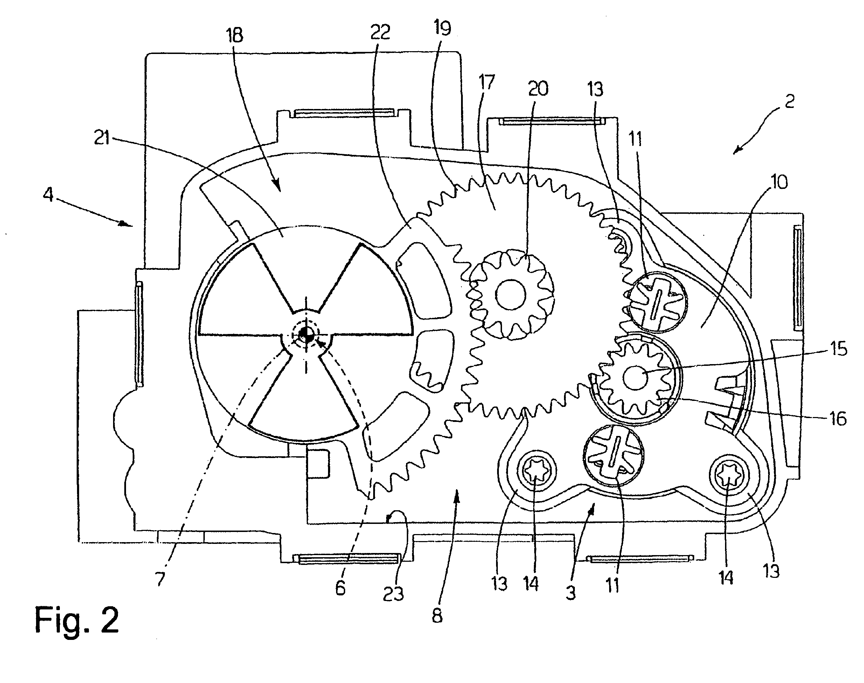

In figure 1, numeral 1 indicates as a whole an electronically controlled butterfly valve for an internal combustion engine (not shown). Butterfly valve 1 comprises a valve body 2 accommodating an actuator device provided with an electric, direct current motor 3 (shown in figures 2, 3 and 4), a tubular, circular section feeding pipe 4 through which the air aspirated by the internal combustion engine flows, and a butterfly plate 5 (diagrammatically shown with a dashed line), which is circular in shape, engages the feeding pipe 4 and rotates between an opening position and a closing position of the feeding pipe 4 due to the action of an actuator device. Butterfly plate 5 is keyed onto a rotating shaft 6 having a longitudinal rotation axis 7 in order to rotate under the actuator device control between the opening position and the closing position due to the action of the actuator device.

As shown in figure 2, the actuator device comprises the electric motor 3, which is coupled to rotating shaft 6 by means of a gear transmission 8, a return spring (not shown and coupled to the rotating shaft 6) adapted to rotate the butterfly valve 5 towards the closing position, and possibly a contrast spring (not shown and coupled to rotating shaft 6) adapted to rotate the butterfly plate 5 towards a partial opening position or limp-home position against the bias of the return spring.

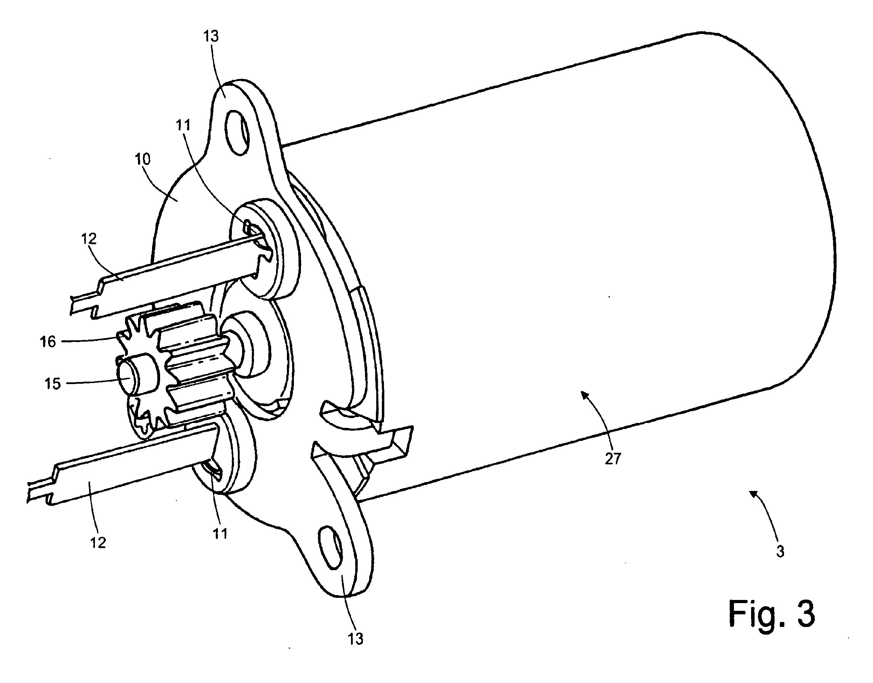

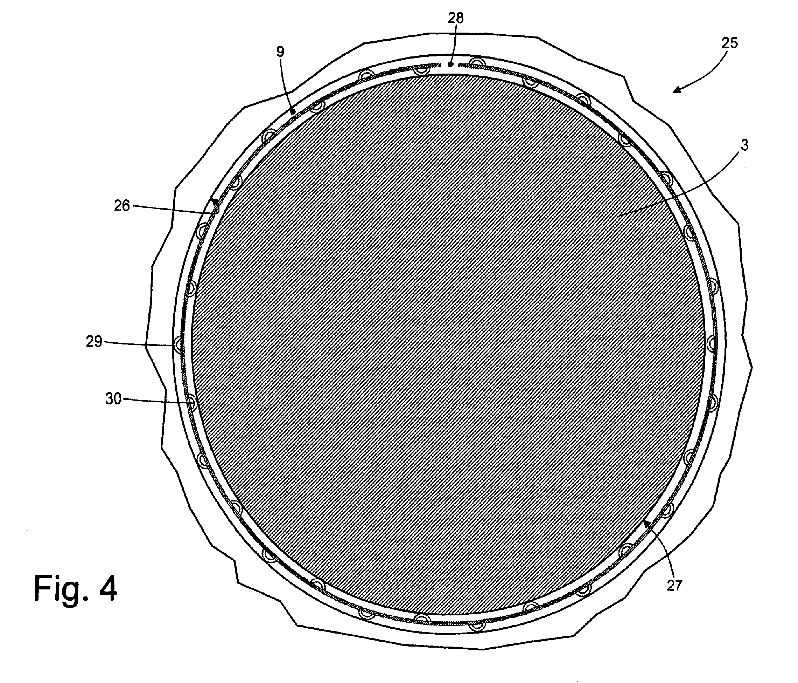

Electric motor 3 has a cylindrical shape and is arranged in a cylinder-shaped, tubular housing 9 (shown in figures 1 and 4) which is arranged by the side of feeding pipe 4 and is blind (i.e. has one open end and one opposite closed end); it is worth noting that tubular housing 9 has a substantially cylindrical shape and due to the foundry draft, it has at the bottom (i.e. at the closed end) a conical portion which is not engaged by electric motor 3. Electric motor 3 is kept within the tubular housing 9 by a metal closing plate 10; i.e. closing plate 10 is fixed at an opening of tubular housing 9 to keep the electric motor 3 within the tubular housing 9 itself. The closing plate 10 comprises a pair of female electric connectors 11, which are electrically connected to electric motor 3, and which are adapted to be engaged by a pair of respective male electric connectors 12 (shown in figures 1 and 3). In order to ensure the correct fastening of electric motor 3 to valve body 2, the closing plate 10 has three perforated radial appendixes 13, through which respective screws 14 to be fastened to valve body 2 are inserted.

Electric motor 3 has a shaft 15 ending with a toothed wheel 16, which is mechanically connected to the rotating shaft 6 by means of an idle toothed wheel 17 interposed between the toothed wheel 16 and an end gear 18 keyed onto shaft 6. The toothed wheel 17 has a first set of teeth 19 coupled to the toothed wheel 16 and a second set of teeth 20 coupled to the end gear 18; the diameter of the first set of teeth 19 is different from the diameter of the second set of teeth 20, thus the toothed wheel 17 determines a non-unitary transmission ratio. End gear 18 is defined by a full, cylindrical central body 21 keyed onto the rotating shaft 6 and provided with a circular crown portion 22 provided with a series of teeth coupled to the toothed wheel 17.

Gear transmission 8 and closing plate 10 are arranged in a chamber 23 of valve body 2, which is closed by a removable lid 24 (shown in figure 1).

As shown in figure 4, the actuator device comprises a clamping band 25, which is inserted into the tubular housing 9 and is arranged between a wall 26 of tubular housing 9 and a wall 27 of electric motor 3.

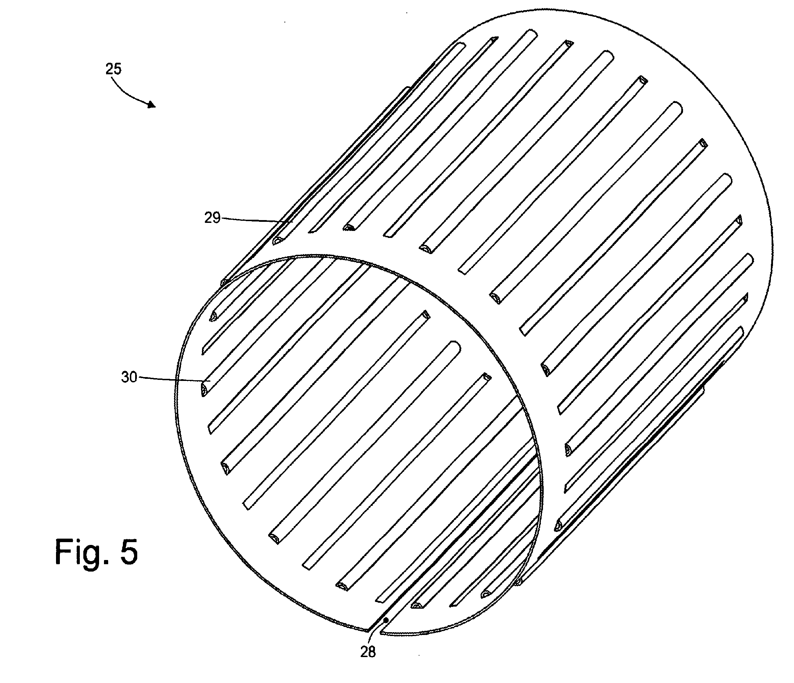

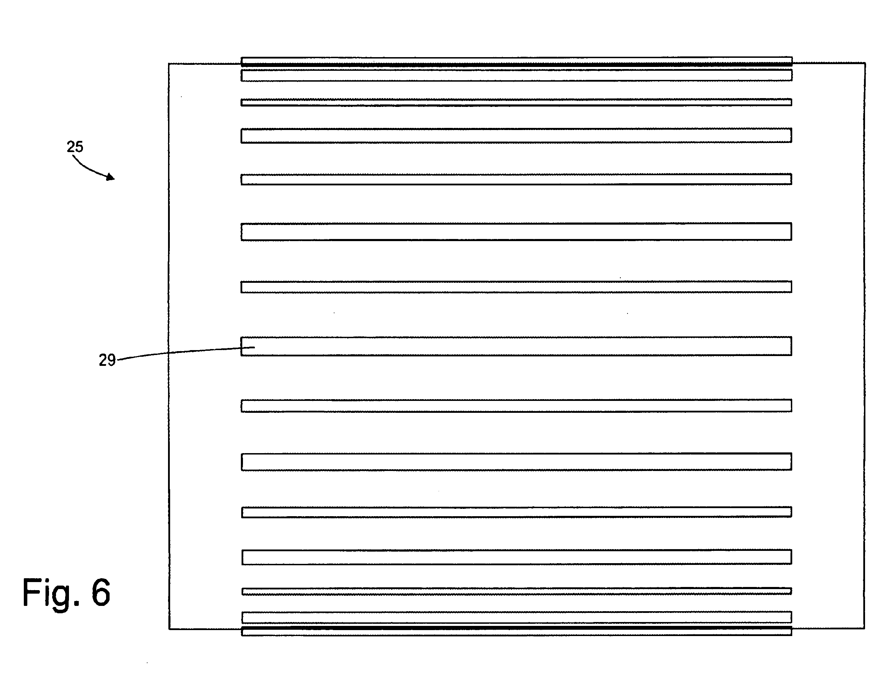

As shown in figures 4, 5 and 6, clamping band 25 has a cylindrical tubular shape and is elastically deformable in the radial direction. In particular, the clamping band 25 has a separate axial opening 28, which breaks the section continuity to allow a radial elastic deformation.

According to a preferred embodiment, clamping band 25 is made of ferromagnetic material having a high permeability; in other words, the magnetic flux which is dispersed by electric motor 3 is "intercepted" by clamping band 25 and tends to close within the clamping band 25 itself. Thereby, clamping band 25 contributes to keeping the magnetic flux produced by the stator windings of electric motor 3 within the electric motor 3, thus reducing the percentage of dispersed magnetic flux and increasing the performance of the electric motor 3 itself.

The clamping band 25 has a series of external ribs 29 protruding outward and a series of internal ribs 30 protruding inward and are alternating with, i.e. arranged in between, the external ribs 29. According to a preferred embodiment, ribs 29 and 30 have a semicircular section, are developed along straight lines and are axially oriented (i.e. parallel to a central symmetry axis of clamping band 25); alternatively, ribs 29 and 30 could either be inclined with respect to the middle symmetry axis of clamping band 25 or could be transversally oriented, and thus could have a circular shape.

According to a preferred embodiment, ribs 29 and 30 are made by localized plastic deformation (typically obtained by pressing) of the material forming the clamping band 25.

Preferably, clamping band 25 has a thickness of about 0.2 mm and each rib 29 or 30 has a radial dimension of about 0.5 mm (i.e. it protrudes internally or externally to the clamping band 25 by about 0.5 mm).

Electric motor 3, tubular housing 9 and clamping band 25 are dimensioned so that the clamping band 25 is subjected to an elastic radial deformation when it is about the electric motor 3 and within the tubular housing 9; thereby, the clamping band 25 has the twofold function of axially holding electric motor 3 within tubular housing 9 by friction and of radially holding electric motor 3 within tubular housing 9 by means of elastic compression. In other words, in order to perform an axial movement, the external wall 27 of electric motor 3 should slide on the internal ribs 30 of clamping band 25 (or, alternatively, the external ribs 29 of clamping band 25 should slide on the internal wall 26 the tubular housing 9); such a sliding should overcome a sliding friction due to the elastic radial deformation to which the clamping band 25 is subjected. Furthermore, in order to be able to preform a radial movement, electric motor 3 should further deform the clamping band 25 and such a deformation implies applying a high radial force.

In order to fit the electric actuator there are two possibilities. A first possibility includes the clamping band 25 being inserted alone into tubular housing 9 (i.e. without any effort) and thus the electric motor 3 is "interference-fitted" (i.e. pushed by applying a relatively high thrust) within the tubular housing 9 lined by the clamping band 25; thereby, a "sliding" occurs between the internal ribs 30 of clamping band 25 and the external wall 27 of electric motor 3 when the electric motor 3 is "fitted" within the tubular housing 9 lined by the clamping band 25. A second possibility includes the clamping band 25 being preventively arranged about the electric motor 3 and thus the clamping band 25 along with the electric motor 3 are "interference-fitted" (i.e. pushed by applying a relatively high thrust) into tubular housing 9; thereby, a "sliding" occurs between the external ribs 29 of clamping band 25 and the internal wall 26 of tubular housing 9.

According to a possible embodiment, the clamping band 25 is made of shape memory material so that when it is subjected to an adequate physical stress (typically heated to more than a predetermined threshold temperature), ribs 29 and 30 are flattened and regain the original shape once the stress ends. In this case, in order to assemble the electric actuators, the clamping band 25 is subjected to the physical stress (i.e. is heated beyond the predetermined threshold temperature) in order to at least partially flatten ribs 29 and 30 and, hence, to reduce the force needed to interference-fit the electric motor 3 and the clamping band 25 in the tubular housing 9.

The above described electric actuator has many advantages.

Firstly, the above-described electric actuator is easy and cost-effective to be implemented as compared to a similar known electric actuator in which clamping band 25 is replaced by a Belleville washer interposed between a bottom wall of electric motor 3 and a bottom wall of tubular housing 9; indeed, the production and assembly costs of the clamping band 25 are similar to those of the Belleville washer.

Furthermore, by virtue of the clamping band 25 axially holding the electric motor 3 by friction (and the static friction is higher than the movement friction), electric motor 3 does not perform any axial movement and therefore in use does not have any axial vibration (i.e. axial vibrations of electric motor 3 are completely cancelled out and not only limited).

Finally, clamping band 25 radially holds the electric motor 3 determining a high reduction of the radial movements of the electric motor 3 itself (i.e. the radial vibrations of electric motor 3 are strongly limited).

## Claims

1. Electric actuator for a valve (1) of an internal combustion thermal engine, the electric actuator comprises:
an electric motor (3) having a cylindrical shape;
a tubular housing (9) in which the electric motor (3) is placed;
a closing plate (10), which is fixed at an opening of the tubular housing to keep the electric motor (3) inside the tubular housing (9); and
a clamping band (25), which is inserted into the tubular housing (9), is placed between a wall (26) of the tubular housing (9) and a wall (27) of the electric motor (3), and presents a set of internal ribs (29, 30);
the electric actuator is **characterized by** the fact that the clamping band (25) is made of shape memory material so that when it is subjected to an adequate physical stress the ribs (29, 30) flatten out and once the physical stress is ended they regain their original shape.

2. Electric actuator according to claim 1, wherein the clamping band (25) is elastically deformable in the radial direction.

3. Electric actuator according to claim 1, wherein the clamping band (25) has a tubular shape and has an axial opening (28) which interrupts the continuity of the section to allow a radial elastic deformation.

4. Electric actuator according to claim 1, 2 or 3 wherein the clamping band (25) has a tubular cylindrical shape.

5. Electric actuator according to one of the claims from 1 to 4, wherein the clamping band (25) is made of ferromagnetic material.

6. Electric actuator according to one of the claims from 1 to 5, wherein the electric motor (3) and the clamping band (25) are inserted to interference into the tubular housing (9).

7. Electric actuator according to one of the claims from 1 to 6, wherein the clamping band (25) presents a set of external ribs (29) protruding outward.

8. Electric actuator according to one of the claims from 1 to 7, wherein the clamping band (25) presents a set of internal ribs (30) protruding inward.

9. Electric actuator according to one of the claims from 1 to 7 wherein the clamping band (25) presents a set of external ribs (29) protruding outward alternating with a set of internal ribs (30) protruding inward.

10. Electric actuator according to one of the claims from 1 to 9, wherein the ribs (29, 30) have a semicircular section.

11. Electric actuator according to one of the claims from 1 to 10, wherein the ribs (29, 30) are oriented axially.

12. Electric actuator according to one of the claims from 7 to 11, wherein the ribs (29, 30) are realized using localized plastic deformation of the material making up the clamping band (25).

13. Method of assembly of the electric actuator according to claim 1; the method of assembly includes the steps of:
subjecting the clamping band (25) to a physical stress to at least partially flatten the ribs (29, 30);
inserting the clamping band (25) into the tubular housing (9);
inserting the electric motor (3) into the tubular housing (9); and
interrupting the physical stress after having inserted the clamping band (25) and the electric motor (3) into the tubular housing (9).

14. Method of assembly according to claim 13 and comprising the further steps of:
wrapping in advance the clamping band (25) around the electric motor (3); and
inserting the electric motor (3) surrounded by clamping band (25) into the tubular housing (9).

15. Method of assembly according to claim 13 and comprising the further steps of:
inserting in advance the clamping band (25) into the tubular housing (9); and
inserting the electric motor (3) into the tubular housing (9) coated internally by the clamping band (25).

## Patentansprüche

1. Elektrischer Aktuator für ein Ventil (1) einer Brennkraftmaschine, wobei der elektrische Aktuator folgendes besitzt:
einen zylinderförmigen Elektromotor (3);
ein rohrförmiges Gehäuse (9), in dem der Elektromotor (3) angeordnet ist;
eine Verschlussplatte (10), die an einer Öffnung des rohrförmigen Gehäuse (9) befestigt ist, um den Elektromotor (3) innerhalb des rohrförmigen Gehäuses (9) zu halten; und
ein Spannband (25), das in das rohrförmige Gehäuse (9) eingeschoben ist, zwischen einer Wand (26) des rohrförmigen Gehäuses (9) und einer Wand (27) des Elektromotors (3) angeordnet ist, und einen Satz interner Rippen oder Stege (29, 30) aufweist;
wobei der elektrische Aktuator durch die Tatsache gekennzeichnet ist, dass das Spannband (25) aus Formgedächtnismaterial hergestellt ist, so dass sich die Rippen oder Stege (29, 30) verflachen, wenn das Material entsprechender physikalischer Belastung ausgesetzt ist, und sie ihre ursprüngliche Form wiedererlangen, sobald die physikalische Belastung aufhört.

2. Elektrischer Aktuator nach Anspruch 1, wobei das Spannband (25) in radialer Richtung elastisch verformbar ist.

3. Elektrischer Aktuator nach Anspruch 1, wobei das Spannband (25) rohrförmig ist, und eine axiale Öffnung (28) besitzt, durch die die Kontinuität des Querschnitts unterbrochen wird, um eine radiale elastische Verformung zu ermöglichen.

4. Elektrischer Aktuator nach Anspruch 1, 2 oder 3, wobei das Spannband (25) zylindrisch (rohrförmig) ist.

5. Elektrischer Aktuator nach einem der Ansprüche 1 bis 4, wobei das Spannband (25) aus ferromagnetischem Material hergestellt ist.

6. Elektrischer Aktuator nach einem der Ansprüche 1 bis 5, wobei der Elektromotor (3) und das Spannband (25) passgenau in das rohrförmige Gehäuse (9) eingeschoben sind.

7. Elektrischer Aktuator nach einem der Ansprüche 1 bis 6, wobei das Spannband (25) einen Satz externer Rippen oder Stege (29) aufweist, die nach außen vorstehen.

8. Elektrischer Aktuator nach einem der Ansprüche 1 bis 7, wobei das Spannband (25) einen Satz interner Rippen oder Stege (30) aufweist, die nach innen vorstehen.

9. Elektrischer Aktuator nach einem der Ansprüche 1 bis 7, wobei das Spannband (25) einen Satz externer Rippen oder Stege (29) aufweist, die nach außen vorstehen, und die sich mit einem Satz interner Rippen oder Stege (30) abwechseln, die nach innen vorstehen.

10. Elektrischer Aktuator nach einem der Ansprüche 1 bis 9, wobei die Rippen oder Stege (29, 30) einen halbkreisförmigen Querschnitt aufweisen.

11. Elektrischer Aktuator nach einem der Ansprüche 1 bis 10, wobei die Rippen oder Stege (29, 30) axial ausgerichtet sind.

12. Elektrischer Aktuator nach einem der Ansprüche 7 bis 11, wobei die Rippen oder Stege (29, 30) unter Verwendung lokaler plastischer Verformung des Werkstoffes, aus dem das Spannband (25) besteht, hergestellt werden.

13. Verfahren zum Zusammenbau des elektrischen Aktuators nach Anspruch 1, wobei das Verfahren zum Zusammenbau die folgenden Schritte aufweist:
das Spannband (25) wird einer physikalischen Belastung ausgesetzt, um die Rippen oder Stege (25, 30) zumindest teilweise flach zu machen;
das Spannband (25) wird in das rohrförmige Gehäuse (9) eingeschoben;
der Elektromotor (3) wird in das rohrförmige Gehäuse (9) eingeschoben; und
die physikalische Belastung wird unterbrochen, nachdem das Spannband (25) und der Elektromotor (3) in das rohrförmige Gehäuse (9) eingeschoben worden sind.

14. Verfahren zum Zusammenbau nach Anspruch 13, das weiterhin die folgenden Schritte aufweist:
vorheriges Umwickeln des Elektromotors (3) mit dem Spannband (25); und
Einschieben des mit dem Spannband (25) umgebenen Elektromotors (3) in das rohrförmige Gehäuse (9).

15. Verfahren zum Zusammenbau nach Anspruch 13, das weiterhin die folgenden Schritte aufweist:
vorheriges Einschieben des Spannbandes (25) in das rohrförmige Gehäuse (9); und
Einschieben des Elektromotors (3) in das rohrförmige Gehäuse (9), das intern mit dem Spannband (25) überzogen ist.

## Revendications

1. Actionneur électrique pour une soupape (1) d'un moteur thermique à combustion interne, l'actionneur électrique comprenant :
un moteur électrique (3) ayant une forme cylindrique ;
un boîtier tubulaire (9) dans lequel est disposé le moteur électrique (3) ;
une plaque de fermeture (10), qui est fixée à une ouverture du boîtier tubulaire de façon à maintenir le moteur électrique (3) à l'intérieur du boîtier tubulaire (9) ; et
une bande de serrage (25), qui est insérée dans le boîtier tubulaire (9), qui est disposée entre une paroi (26) du boîtier tubulaire (9) et une paroi (27) du moteur électrique (3), et qui présente un jeu de nervures internes (29 ; 30) ;
l'actionneur électrique étant **caractérisé par le fait que** la bande de serrage (25) est réalisée en un matériau à mémoire de forme, de telle sorte que, lorsqu'elle est soumise à une contrainte physique adéquate, les nervures (29, 30) s'aplatissent, et que, une fois que la contrainte physique est supprimée, elles reprennent leur forme originale.

2. Actionneur électrique selon la revendication 1, dans lequel la bande de serrage (25) est élastiquement déformable dans la direction radiale.

3. Actionneur électrique selon la revendication 1, dans lequel la bande de serrage (25) a une forme tubulaire et comporte une ouverture axiale (28) qui interrompt la continuité de la section de façon à permettre une déformation élastique radiale.

4. Actionneur électrique selon la revendication 1, 2 ou 3, dans lequel la bande de serrage (25) a une forme cylindrique tubulaire.

5. Actionneur électrique selon l'une des revendications 1 à 4, dans lequel la bande de serrage (25) est réalisée en un matériau ferromagnétique.

6. Actionneur électrique selon l'une des revendications 1 à 5, dans lequel le moteur électrique (3) et la bande de serrage (25) sont insérés à interférence dans le boîtier tubulaire (9).

7. Actionneur électrique selon l'une des revendications 1 à 6, dans lequel la bande de serrage (25) présente un jeu de nervures externes (29) faisant saillie vers l'extérieur.

8. Actionneur électrique selon l'une des revendications 1 à 7, dans lequel la bande de serrage (25) présente un jeu de nervures internes (30) faisant saillie vers l'intérieur.

9. Actionneur électrique selon l'une des revendications 1 à 7, dans lequel la bande de serrage (25) présente un jeu de nervures externes (29) faisant saillie vers l'extérieur alternant avec un jeu de nervures internes (30) faisant saillie vers l'intérieur.

10. Actionneur électrique selon l'une des revendications 1 à 9, dans lequel les nervures (29, 30) ont une section semi-circulaire.

11. Actionneur électrique selon l'une des revendications 1 à 10, dans lequel les nervures (29, 30) sont orientées axialement.

12. Actionneur électrique selon l'une des revendications 7 à 11, dans lequel les nervures (29, 30) sont réalisées à l'aide d'une déformation plastique localisée du matériau constituant la bande de serrage (25).

13. Procédé d'assemblage de l'actionneur électrique selon la revendication 1; le procédé d'assemblage comprenant les étapes consistant à :
soumettre la bande de serrage (25) à une contrainte physique de façon à aplatir au moins partiellement les nervures (29, 30) ;
insérer la bande de serrage (25) dans le boîtier tubulaire (9) ;
insérer le moteur électrique (3) dans le boîtier tubulaire (9) ; et
interrompre la contrainte physique après avoir inséré la bande de serrage (25) et le moteur électrique (3) dans le boîtier tubulaire (9).

14. Procédé d'assemblage selon la revendication 13, et comprenant les étapes supplémentaires consistant à :
enrouler à l'avance la bande de serrage (25) autour du moteur électrique ; et
insérer le moteur électrique (3) entouré par la bande de serrage (25) dans le boîtier tubulaire (9).

15. Procédé d'assemblage selon la revendication 13, et comprenant les étapes supplémentaires consistant à :
insérer à l'avance la bande de serrage (25) dans le boîtier tubulaire (9) ; et
insérer le moteur électrique (3) dans le boîtier tubulaire (9) revêtu intérieurement par la bande de serrage (25).
